# EUROPÄISCHE PATENTSCHRIFT

(11) **EP 3 417 689 B1**
(45) Veröffentlichungstag und Bekanntmachung des Hinweises auf die Patenterteilung: **15.04.2020**
(21) Anmeldenummer: 18401048.6
(22) Anmeldetag: 17.05.2018
(51) Int. Cl.: A01C 7/08, A01C 7/10

(54) **LANDWIRTSCHAFTLICHE PNEUMATISCHE VERTEILMASCHINE**
AGRICULTURAL PNEUMATIC DISTRIBUTOR
MACHINE D'ÉPANDAGE PNEUMATIQUE AGRICOLE

(30) Priorität: 20.06.2017 DE 102017113488
(43) Veröffentlichungstag der Anmeldung: 26.12.2018
(73) Patentinhaber: Amazonen-Werke H. Dreyer GmbH & Co. KG, 49205 Hasbergen (DE)
(72) Erfinder: Brüggemann, Klaus, 27777 Ganderkesee (DE); Flucke, Jan, 27798 Hude (DE); Ahrens, Jan Bodo, 21522 Hohnstorf/ Elbe (DE); Grosenik, Rainer, 27777 Bergedorf (DE)

(56) Entgegenhaltungen:
- WO-A1-2017/055266
- DE-A1- 4 004 685
- US-A1- 2016 157 420
- US-A1- 2016 219 781

## Beschreibung

Die Erfindung betrifft eine landwirtschaftliche pneumatische Verteilmaschine nach dem Oberbegriff des Patentanspruchs 1.

Beim Ausbringen von Saatgut und/oder Dünger besteht an Feldkeilen oder im Bereich des Vorgewendes regelmäßig die Notwendigkeit, die Verteilcharakteristik der eingesetzten landwirtschaftlichen pneumatischen Verteilmaschine anzupassen, damit Säfenster und Überlappungen effektiv vermieden werden können.

Die Anpassung der Verteilcharakteristik erfolgt beispielsweise durch eine Segment- oder Einzelreihenabschaltung, bei welcher einzelnen Ausbringelementen temporär kein Saatgut und/oder Dünger zugeführt wird. Die Ausbringelemente können dabei beispielsweise als Säschare oder Düngerschare ausgebildet sein.

Entsprechende landwirtschaftliche pneumatische Verteilmaschinen können ein Steuersystem aufweisen, welches dazu eingerichtet ist, ein Dosierorgan zu steuern, welches über eine Förderleitung mit einem Verteilerkopf verbunden ist. Der Verteilerkopf umfasst dabei mehrere Ausgangsöffnungen, welche mit blockierbaren Ausbringleitungen verbunden sind. Damit die Ausbringrate der einzelnen Ausbringelemente an Feldkeilen oder im Bereich des Vorgewendes konstant gehalten werden kann, wird die zu dem Verteilerkopf geförderte Menge an zu verteilendem Material entsprechend angepasst, wenn die Verteilcharakteristik durch eine Segment- und/oder Einzelreihenabschaltung verändert wird.

Aus der Druckschrift DE 40 04 685 C3 ist beispielsweise eine landwirtschaftliche Maschine zum Verteilen von Granulatmaterial bekannt, bei welcher der Strom von Granulatmaterial von einem Vorratsbehälter zu dem Verteilerkopf in Proportion zu der Anzahl der abgesperrten Ausleger reduziert wird, um eine gleichförmige Ausbringrate durch die verbleibenden Ausleger sicherzustellen.

Andere landwirtschaftliche Verteilmaschinen sind außerdem aus den Druckschriften WO 2017/055266 A1 und US 2016/219781 A1 bekannt.

Durch die zeitliche Verzögerung des Materialstroms von dem Dosierorgan bis zu dem Verteilerkopf ist eine präzise und bedarfsgerechte Reduzierung der Materialmenge während der einer Segment- oder Einzelreihenabschaltung bisher nicht möglich. Ferner steht durch die zeitliche Verzögerung des Materialstroms von dem Dosierorgan bis zu dem Verteilerkopf bei Arbeitsbeginn am Vorgewende nicht sofort ausreichend Material zur Verfügung, sodass im Bereich des Vorgewendes eine homogene Ausbringung des zu verteilenden Materials bisher nicht möglich ist.

Die der Erfindung zugrunde liegende Aufgabe besteht somit darin, die Ausbringung von körnigem Material mittels einer landwirtschaftlichen pneumatischen Verteilmaschine an Feldkeilen und im Bereich von Vorgewenden zu verbessern.

Die Aufgabe wird gelöst durch eine landwirtschaftliche pneumatische Verteilmaschine der eingangs genannten Art, dadurch dass das Steuersystem dazu eingerichtet ist, das Dosierorgan basierend auf der Vortriebsgeschwindigkeit der Verteilmaschine, einer Förderdauer des zu verteilenden Materials vom Dosierorgan zum Verteilerkopf und einer Förderdauer des zu verteilenden Materials vom Verteilerkopf zu den Ausbringelementen derart zu steuern, dass zu jeder Zeit vorauseilend die momentan notwendige Gesamtmenge des auszubringenden Materials am Verteilerkopf ansteht, wobei zu jeder Zeit vorauseilend die ermittelte notwendige Gesamtmenge des auszubringenden Materials im Rückführbereich zirkuliert und bei Freigabe zumindest einer zuvor blockierten Ausbringleitung ohne Verzögerung eine notwendige Teilmenge der entsprechenden Ausbringleitung zugeführt wird.

Die Erfindung macht sich die Erkenntnis zunutze, dass auf Grundlage der Vortriebsgeschwindigkeit der Verteilmaschine und der Förderdauer des zu verteilenden Materials von dem Dosierorgan zu dem Verteilerkopf die durch das Dosierorgan geförderte Materialmenge bereits vor der Blockade oder Freigabe von einzelnen Ausbringleitungen derart angepasst werden kann, damit zum Zeitpunkt der Blockade oder Freigabe der einzelnen Ausbringleitungen die geeignete Menge zu verteilenden Materials im Verteilerkopf bereitsteht. Darüber hinaus kann auf Grundlage der Vortriebsgeschwindigkeit der Verteilmaschine und der Förderdauer des zu verteilenden Materials vom Verteilerkopf zu den Ausbringelementen die Blockade oder Freigabe von einzelnen Ausbringleitungen rechtzeitig vor Erreichen des Feldabschnitts, welcher einer Anpassung der Verteilcharakteristik bedarf, erfolgen, sodass bei Erreichen des Feldabschnitts die beabsichtigte Anpassung der Verteilcharakteristik erfolgt.

Vorzugsweise verbleibt das Luft-Material-Gemisch in einem Zuführbereich, wenn eine Ausbringleitung mittels eines Umschaltelements blockiert wird, wobei der Zuführbereich zumindest einen Endbereich der Förderleitung und den Verteilerkopf umfasst. Die Verteilmaschine umfasst vorzugsweise zumindest einen Vorratsbehälter zur Bevorratung des zumindest einen zu verteilenden Materials, wobei dem Vorratsbehälter das Dosierorgan zugeordnet ist, welches das zu verteilende Material in einstellbaren Mengen in die pneumatisch beaufschlagte Förderleitung einspeist, in welcher das zu verteilende Material als Luft-Material-Gemisch gefördert wird. Insbesondere sind die Ausgangsöffnungen entlang des Umfangs des Verteilerkopfes, vorzugsweise gleichmäßig zueinander beabstandet, angeordnet. Die notwendige Gesamtmenge des auszubringenden Materials kann eine Materialmenge pro Flächen-, Strecken- oder Zeiteinheit sein.

In einer besonders bevorzugten Ausführungsform der erfindungsgemäßen Verteilmaschine steuert das Steuersystem das Dosierorgan derart, dass die in die Förderleitung eingespeiste Menge zu verteilenden Materials der am Verteilerkopf notwendigen Gesamtmenge an zu verteilendem Material entspricht. Vorzugsweise verhält sich die am Verteilerkopf notwendige Gesamtmenge an zu verteilendem Material bezüglich der notwendigen Gesamtmenge an zu verteilendem Material, welche benötigt wird, wenn keine der Ausbringleitungen blockiert ist, ebenso wie die Anzahl der nicht blockierten Ausbringleitungen bezüglich der Gesamtanzahl aller Ausbringleitungen. Auf diese Weise steht bei der Blockade oder Freigabe einzelner Ausbringleitungen im Rahmen einer Segment- oder Einzelreihenabschaltung stets eine auf die Anzahl der blockierten beziehungsweise freigegebenen Ausbringleitungen angepasste Menge an zu verteilendem Material im Verteilerkopf bereit.

In einer anderen Ausführungsform der erfindungsgemäßen Verteilmaschine umfasst das Steuersystem eine Speichereinheit, zumindest eine Erfassungseinrichtung und/oder eine Auswerteeinheit. Die Auswerteeinheit ist dazu eingerichtet, anhand von Daten, welche in der Speichereinheit hinterlegt sind und/oder von der zumindest einen Erfassungseinrichtung erfasst werden, Ausbringparameter zu ermitteln, welche zumindest eine momentan notwendige Gesamtmenge des zu verteilenden Materials, eine Förderdauer des zu verteilenden Materials von dem Dosierorgan zum Verteilerkopf und eine Förderdauer des zu verteilenden Materials von dem Verteilerkopf zu den Ausbringelementen umfassen. Die Daten, welche auf der Speichereinheit hinterlegt sind und/oder von der zumindest einen Erfassungseinrichtung erfasst werden, können beispielsweise Applikationsinformationen, Strömungsgeschwindigkeiten und/oder den Zustand der Umschaltelemente umfassen. Die Applikationsinformationen können beispielsweise Applikationskarten umfassen. Vorzugsweise wird die Strömungsgeschwindigkeit des zu verteilenden Materials zwischen dem Dosierorgan und dem Verteilerkopf sowie zwischen dem Verteilerkopf und den Ausbringelementen an einer oder mehreren Stellen erfasst. Insbesondere werden bei der Ermittlung der Ausbringparameter auch die Leitungslängen zwischen dem Dosierorgan und dem Verteilerkopf sowie zwischen dem Verteilerkopf und den Ausbringelementen berücksichtigt. Die berücksichtigten Leitungslängen zwischen dem Dosierorgan und dem Verteilerkopf und/oder zwischen dem Verteilerkopf und den Ausbringelementen können den tatsächlichen Leitungslängen oder durchschnittlichen Leitungslängen entsprechen, welche von den tatsächlichen Leitungslängen unwesentlich abweichen.

Ferner ist eine erfindungsgemäße Verteilmaschine bevorzugt, bei welcher das Umschaltelement anhand der ermittelten Ausbringparameter mittels eines vom Steuersystem, vorzugsweise automatisiert, betätigbaren Betätigungselements zwischen einer die Ausbringleitung freigebenden Ausbringstellung und einer die Ausbringleitung blockierenden Rückführstellung verbringbar ist. Vorzugsweise umfasst das Betätigungselement einen bistabilen Drehmagneten. Die Betätigung eines Umschaltelements mittels eines bistabilen Drehmagneten erlaubt die Realisierung von äußerst kurzen Schaltzeiten, sodass das Blockieren oder Freigeben der Ausbringleitungen mit einer hohen zeitlichen Präzision erfolgen kann. Das Umschaltelement ist vorzugsweise aus einem Metall oder einer Metalllegierung ausgebildet und derart angelenkt, dass das Umschaltelement über die Betätigung des Betätigungselements in zumindest zwei Drehwinkelstellungen gebracht werden kann. In einer ersten Drehwinkelstellung blockiert das Umschaltelement dabei die Ausbringleitung, wobei das Umschaltelement in der ersten Drehwinkelstellung vorzugsweise die Rückführleitung freigibt. In einer zweiten Drehwinkelstellung gibt das Umschaltelement die Ausbringleitung frei, wobei das Umschaltelement in der zweiten Drehwinkelstellung vorzugsweise die Rückführleitung blockiert.

Erfindungsgemäß sind zumindest einige Ausgangsöffnungen jeweils über eine Rückführleitung pneumatisch mit der Förderleitung verbunden und die Rückführleitungen weisen jeweils eine Abzweigung auf, welche mit einer Bypass-Leitung verbunden ist, die in die zugehörige Ausbringleitung einmündet. Über die Bypass-Leitung kann ein Luftstrom zu den Ausbringelementen aufrechterhalten werden, auch wenn sich das Umschaltelement in der die Ausbringleitung blockierenden Rückführstellung befindet. Auf diese Weise kann verhindert werden, dass durch ein Blockieren von Ausbringleitungen die pneumatische Förderung des zu verteilenden Materials zu dem Verteilerkopf aufgrund eines sich ausbildenden zu hohen Gegendrucks, welcher auf die in die Förderleitung zurückgeführten und/oder zurückgestauten Luftströme zurückgeht, zusammenbricht. Ohne die Bypass-Leitung würde bei einer zunehmenden Anzahl von blockierten Ausbringleitungen der statische Druck in der Förderleitung ansteigen. Übersteigt dieser statische Druck den Druck des Fördergebläses, bricht die Förderung des zu verteilenden Materials in Richtung des Verteilerkopfes zusammen. Durch die Bypass-Leitung wird zumindest ein Teil des Luftstroms von dem zu verteilenden Material getrennt und zu den Ausbringelementen weitergeleitet. Ein sich hieraus ergebender weiterer Vorteil besteht darin, dass durch die andauernde Luftförderung zu den Ausbringelementen das in den Ausbringleitungen zurückgebliebene zu verteilende Material weiterhin zu den Ausbringelementen gefördert wird, obwohl sich das Umschaltelement in der die Ausbringleitung blockierenden Rückführstellung befindet. Hierdurch wird vermieden, dass das in den Ausbringleitungen zurückgebliebene zu verteilende Material aufgrund der Schwerkraft durch die Ausbringleitung zu den Ausbringelementen rollt und sich hierdurch Materialverschleppungen ergeben.

Ferner ist eine erfindungsgemäße Verteilmaschine bevorzugt, bei welcher in der Rückführstellung des Umschaltelements Luft des Luft-Material-Gemisches der Ausbringleitung über die Bypass-Leitung zugeführt wird. Vorzugsweise ist die Verteilmaschine derart ausgebildet, dass auch zu verteilendes Material in die Bypass-Leitung gelangen kann. Jedoch ist die Bypass-Leitung vorzugsweise derart ausgebildet, dass in die Bypass-Leitung gelangtes zu verteilendes Material innerhalb der Bypass-Leitung zurück in die Rückführleitung umgeleitet wird. Vorzugsweise wird ein Teil der Luft des in die Bypass-Leitung einströmenden Luft-Material-Gemisches durch die Bypass-Leitung zu den Ausbringelementen geleitet. Der übrige Luftanteil wird mit dem Material des in die Bypass-Leitung eingeströmten Luft-Material-Gemisches zurück in die Rückführleitung geleitet. Vorzugsweise strömen etwa zwei Drittel des von dem Umschaltelement in die Rückführleitung gelenkten Luft-Material-Gemisches in die Bypass-Leitung, wobei etwa ein Drittel des von dem Umschaltelement in die Rückführleitung gelenkten Luft-Material-Gemisches an der Bypass-Leitung vorbei in Richtung der Förderleitung strömt.

Die erfindungsgemäße Verteilmaschine wird ferner dadurch vorteilhaft weitergebildet, dass die Förderleitung eine düsenartige Einschnürung aufweist. Die Rückführleitungen münden, vorzugsweise unmittelbar, in Förderrichtung hinter der düsenartigen Einschnürung in die Förderleitung. Die düsenartige Einschnürung der Förderleitung ist vorzugsweise dazu eingerichtet, das die Förderleitung durchströmende zu verteilende Material daran zu hindern, in die mit der Förderleitung verbundenen Rückführleitungen einzutreten. Dies wird dadurch erreicht, dass die düsenartige Einschnürung der Förderleitung eine Sogwirkung entfaltet, wobei die Sogwirkung das zu verteilende Material an den Öffnungen zu den Rückführleitungen vorbei in Richtung des Verteilerkopfes lenkt. Außerdem entsteht durch die düsenartige Einschnürung der Förderleitung eine erhöhte Strömungsgeschwindigkeit in der Förderleitung, sodass der entstehende Sog auch das von den Rückführleitungen in die Förderleitung einströmende zu verteilende Material in Richtung des Verteilerkopfes beschleunigt.

Außerdem ist eine erfindungsgemäße Verteilmaschine bevorzugt, bei welcher jeweils mehrere benachbarte Rückführleitungen in ein Sammelelement münden und die Sammelelemente mit der Förderleitung verbunden sind. Vorzugsweise münden zwei, drei, vier oder fünf benachbarte Rückführleitungen oder die Hälfte, ein Viertel, ein Achtel oder ein Sechszehntel der gesamten Rückführleitungen jeweils in ein Sammelelement. Die Sammelelemente sind vorzugsweise mittels Sammelleitungen mit der Förderleitung verbunden. Die Sammelleitungen münden, vorzugsweise unmittelbar, in Förderrichtung hinter der düsenartigen Einschnürung in die Förderleitung. Die düsenartige Einschnürung der Förderleitung ist vorzugsweise dazu eingerichtet, das die Förderleitung durchströmende zu verteilende Material daran zu hindern, in die mit der Förderleitung verbundenen Sammelleitungen einzutreten.

Erfindungsgemäß umfasst ein Zuführbereich zumindest den Endbereich der Förderleitung, den Verteilerkopf und die Rückführleitungen, wobei das rückgeführte Material innerhalb des Zuführbereichs zirkulieren kann. Dadurch, dass das rückgeführte Material innerhalb des Rückführbereichs zirkulieren kann, steht bei der Freigabe der Ausbringleitungen sofort ein gleichmäßiger Materialstrom zur Verfügung.

Erfindungsgemäß zirkuliert zu jeder Zeit vorauseilend die ermittelte notwendige Gesamtmenge des auszubringenden Materials im Rückführbereich und bei Freigabe zumindest einer zuvor blockierten Ausbringleitung wird ohne Verzögerung eine notwendige Teilmenge der entsprechenden Ausbringleitung zugeführt. Die notwendige Gesamtmenge ist die Summe aller notwendigen Teilmengen und basiert auf den durch die Auswerteeinheit festgestellten Erfordernissen bezüglich Menge, Position und

Zeitpunkt. Insbesondere kann die notwendige Teilmenge eines Ausbringelements auch null sein.

Ferner ist eine erfindungsgemäße Verteilmaschine vorteilhaft, bei welcher die Ansteuerung der die Umschaltelemente verbringenden Betätigungselemente individuell zusätzlich auf der Förderdauer zwischen dem Verteilerkopf und dem jeweiligen Ausbringelement basiert und zeitlich derart erfolgt, dass zu jeder Zeit die notwendige Teilmenge ohne Verzögerung am entsprechenden Ausbringelement verfügbar ist.

Weitere Einzelheiten der Erfindung sind der Figurenbeschreibung und den Zeichnungen zu entnehmen. Es zeigen
- Fig. 1: ein Ausführungsbeispiel der erfindungsgemäßen landwirtschaftlichen pneumatischen Verteilmaschine in einer perspektivischen Darstellung;
- Fig. 2: den Verteilerkopf der in der Fig. 1 dargestellten Verteilermaschine in einer perspektivischen Darstellung;
- Fig. 3: den Verteilerkopf der in der Fig. 1 dargestellten Verteilermaschine in einer Schnittdarstellung;
- Fig. 4: eine Rückführeinrichtung einer erfindungsgemäßen landwirtschaftlichen pneumatischen Verteilmaschine in einer Schnittdarstellung; und
- Fig. 5: einen mit der erfindungsgemäßen landwirtschaftlichen pneumatischen Verteilmaschine ausführbaren Verteilvorgang.

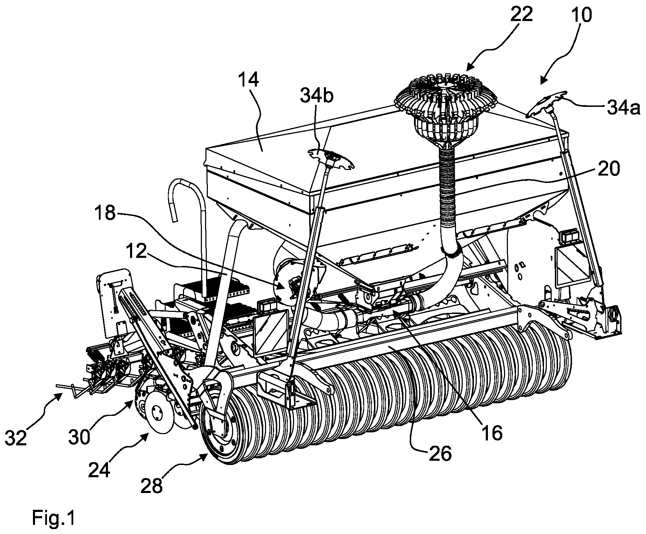

Die Fig. 1 zeigt eine als pneumatische Aufbausämaschine ausgebildete landwirtschaftliche pneumatische Verteilmaschine 10 zum Verteilen von körnigem Material, nämlich von Saatgut.

Die Verteilmaschine 10 umfasst einen Rahmenaufbau 12, an welchem ein Vorratsbehälter 14 angeordnet ist. Der Vorratsbehälter 14 ist dazu eingerichtet, das zu verteilende körnige Material zu bevorraten. Der Vorratsbehälter 14 ist über ein Dosierorgan 16 mit einer Förderleitung 20 verbunden, wobei das dosierte körnige Material mittels eines Fördergebläses 18 zu der Förderleitung 20 transportiert wird. Das Dosierorgan 16 ist dazu eingerichtet, das zu verteilende Material in einstellbaren Mengen in die pneumatisch beaufschlagte Förderleitung 20 einzuspeisen, wobei das zu verteilende Material in der Förderleitung 20 als Luft-Material-Gemisch gefördert wird. Das Fördergebläse 18 wird beispielsweise über einen Hydraulikmotor angetrieben und verursacht einen ausreichenden Druck, um das körnige zu verteilende Material durch die Förderleitung 20 zu einem Verteilerkopf 22 zu transportieren.

Der Verteilerkopf 22 weist mehrere Ausgangsöffnungen auf. Die Ausgangsöffnungen sind gleichmäßig entlang des Umfangs der Verteilerkopfes 22 verteilt, sodass benachbarte Ausgangsöffnungen jeweils äquidistant voneinander beabstandet angeordnet sind. Jede Ausgangsöffnung ist pneumatisch über eine Ausbringleitung (ausgeblendet) mit einem als Säschar ausgebildeten Ausbringelement 24 verbunden. Die Ausbringelemente 24 sind an einem Tragrahmen 26 befestigt und jeweils dazu eingerichtet, das zu verteilende körnige Material in einer Furche des Ackerbodens abzulegen.

In Fahrtrichtung FR vor den Ausbringelementen 24 ist eine Walze 28 angeordnet, welche als Keilringwalze ausgebildet und dazu eingerichtet ist, den zuvor bearbeiteten Ackerboden rückzuverfestigen. In Fahrtrichtung FR hinter den Ausbringelementen 24 sind Tiefenführungsrollen 30 angeordnet, wobei jeweils einem Ausbringelement 24 eine Tiefenführungsrolle 30 zugeordnet ist. Mittels der Tiefenführungsrollen 30 lässt sich die Ablagetiefe des zu verteilenden körnigen Materials einstellen. In Fahrtrichtung FR hinter den Tiefenführungsrollen 30 sind außerdem Striegel 32 angeordnet, welche dazu eingerichtet sind, das abgelegte körnige Material mit einer einstellbaren Intensität mit loser Erde zu bedecken. Die dargestellten Striegel 32 sind in Zinkenbauweise ausgeführt, wobei alternativ auch Rollenstriegel zum Einsatz kommen können.

Außerdem weist die landwirtschaftliche pneumatische Verteilmaschine 10 zwei Spuranreißer 34a, 34b auf, welche jeweils dazu eingerichtet sind, eine Markierung auf dem Ackerboden zu erzeugen. Die Markierungen zeigen die benachbarte Fahrspur an.

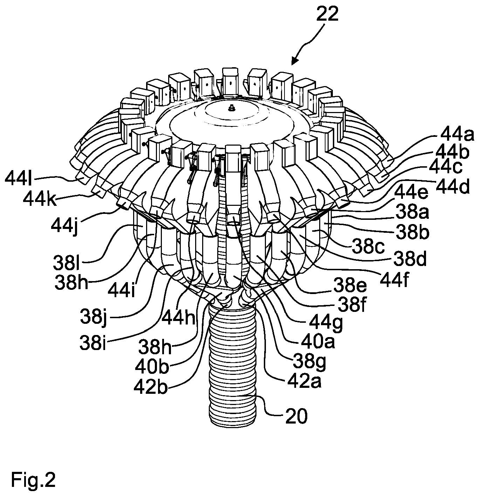

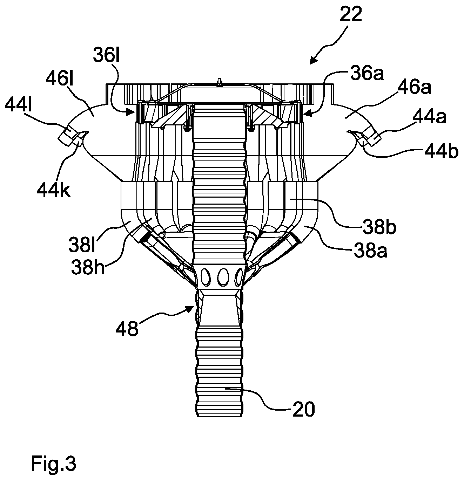

Die Fig. 2 und die Fig. 3 zeigen den Verteilerkopf 22 der in der Fig. 1 dargestellten Verteilmaschine 10, wobei die Ausgangsöffnungen 36a, 36l des Verteilerkopfes 22 jeweils mit einer Rückführeinrichtung 46a, 46l verbunden sind.

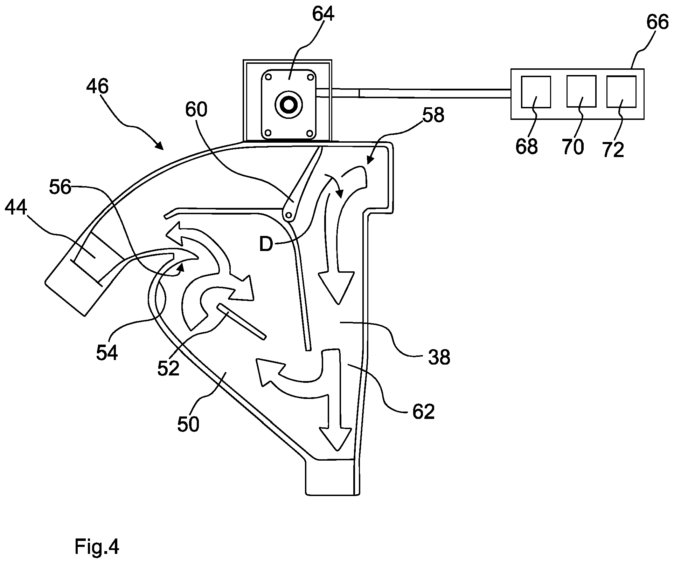

Die Rückführeinrichtungen 46a, 46l umfassen jeweils einen Abschnitt einer Ausbringleitung 44a-44l, welche den Verteilerkopf 22 pneumatisch mit den Ausbringelementen verbinden. Ferner umfassen die Rückführeinrichtungen 46a, 46l jeweils einen Abschnitt einer Rückführleitung 38a-38l, welche den Verteilerkopf 22 pneumatisch mit der Förderleitung 20 verbinden. Die Ausbringleitungen 44a-44l und Rückführleitungen 38a-38l sind über Umschaltelemente 60 (siehe Fig. 4) in den Rückführeinrichtungen 46a, 46l blockierbar und freigebbar.

Jeweils drei benachbarte Rückführleitungen 38a-38l münden dabei in ein Sammelelement 40a, 40b, wobei die Sammelelemente 40a, 40b jeweils über eine Sammelleitung 42a, 42b mit der Förderleitung 20 verbunden sind. Alternativ können auch zwei oder mehr als drei benachbarte Rückführleitungen 38a-38l in ein Sammelelement 40a, 40b münden. Außerdem weist die Förderleitung 20 eine düsenartige Einschnürung 48 auf. Die Sammelleitungen 42a, 42b münden unmittelbar in Förderrichtung hinter der düsenartigen Einschnürung 48 in die Förderleitung 20. Die düsenartige Einschnürung 48 hindert Material daran beim Aufsteigen in der Förderleitung über die Sammelleitungen 42a, 42b und die Sammelelemente 40a, 40b in die Rückführleitungen 38a-38l einzutreten.

Über die Ausbringleitungen 44a-44l kann das körnige zu verteilende Material den Ausbringelementen 24 zugeführt werden. Über die Rückführleitungen 38a-38l kann das körnige zu verteilende Material in die Förderleitung 20 zurückgeleitet werden. Ein Zuführbereich umfasst einen Endbereich der Förderleitung 20, den Verteilerkopf 22 und die Rückführleitungen 38a-38l, wobei das rückgeführte Material innerhalb des Zuführbereichs zirkulieren kann.

Über ein Steuersystem können die Ausbringleitungen 44a-44l und Rückführleitungen 38a-38l gezielt blockiert und freigegeben und das Dosierorgan gesteuert werden, wobei die Steuerung derart erfolgt, dass zu jeder Zeit vorauseilend eine ermittelte notwendige Gesamtmenge des auszubringenden Materials im Rückführbereich zirkuliert und bei Freigabe zumindest einer zuvor blockierten Ausbringleitung 44a-44l ohne Verzögerung eine notwendige Teilmenge der entsprechenden Ausbringleitung 44a-44l zugeführt wird.

Die Fig. 4 zeigt beispielhaft eine Rückführeinrichtung 46, wobei die Rückführeinrichtungen 46a, 46l der in den Fig. 1 bis 3 dargestellten Verteilmaschine 10 beispielsweise entsprechend der in der Fig. 4 dargestellten Rückführeinrichtung 46 ausgebildet sein können.

Der innerhalb der Rückführeinrichtung 46 befindliche Abschnitt der Rückführleitung 38 weist eine Abzweigung auf, welche mit einer Bypass-Leitung 50 verbunden ist. Die Bypass-Leitung 50 mündet in den in der Rückführeinrichtung 46 befindlichen Abschnitt der Ausbringleitung 44 ein. Die Rückführleitung 38 weist eine düsenartige Einschnürung 62 auf, welche Material daran hindert, in die Bypass-Leitung 50 einzutreten. Die düsenartige Einschnürung 62 erzeugt eine Sogwirkung, sodass Material aus der Rückführleitung 38 in die Förderleitung (nicht dargestellt) zurückgeführt wird.

Innerhalb der Rückführeinrichtung 46 ist eine Weiche 58 mit einem Umschaltelement 60 angeordnet, mittels welchem die Ausbringleitung 44 blockierbar ist, sodass das Eintreten eines Luft-Material-Gemisches in die Ausbringleitung 44 unterbunden wird. Das Umschaltelement 60 kann mittels eines betätigbaren Betätigungselements 64 zwischen einer die Ausbringleitung 44 freigebenden und die Rückführleitung blockierenden Ausbringstellung und einer die Ausbringleitung 44 blockierenden und die Rückführleitung freigebenden Rückführstellung verbracht werden. Das Betätigungselement 64 umfasst einen bistabilen Drehmagneten, welcher dazu eingerichtet ist, eine Drehbewegung des Umschaltelements 60 in die Drehrichtung D zu verursachen, um das Umschaltelement 60 zwischen der Ausbringstellung und der Rückführstellung zu verfahren. Wenn eine Ausbringleitung 44 mittels des Umschaltelements 60 blockiert wird, zirkuliert das Luft-Material-Gemisch in einem Zuführbereich, welcher einen Endbereich der Förderleitung 20, die Rückführleitung 38 und den Verteilerkopf 22 umfasst.

Das Betätigungselement 64 wird über das Steuersystem 66 automatisiert gesteuert. Die Ansteuerung des das Umschaltelement 60 verbringenden Betätigungselements 64 basiert individuell zusätzlich auf der Förderdauer zwischen dem Verteilerkopf 22 und dem Ausbringelement 24 und erfolgt derart, dass zu jeder Zeit die notwendige Teilmenge ohne Verzögerung am entsprechenden Ausbringelement 24 verfügbar ist.

In der Rückführstellung des Umschaltelements 60 wird Luft des Luft-Material-Gemisches der Ausbringleitung 44 über die Bypass-Leitung 50 zugeführt wird. Auf diese Weise wird verhindert, dass durch ein Blockieren mehrerer Ausbringleitungen 44 die pneumatische Förderung des zu verteilenden Materials zu dem Verteilerkopf 22 zusammenbricht. Die pneumatische Förderung des zu verteilenden Materials zu dem Verteilerkopf 22 würde nämlich zusammenbrechen, wenn sich durch das Blockieren mehrerer Ausbringleitungen 44 ein Gegendruck einstellt, welcher größer ist als der Druck, den das Fördergebläse 18 verursacht. Durch die Bypass-Leitung 50 wird zumindest ein Teil des Luftstroms von dem zu verteilenden Material getrennt und zu den Ausbringelementen 24 weitergeleitet.

Beim Einströmen in die Bypass-Leitung 50 wird jedoch ein geringer Anteil des körnigen zu verteilenden Materials mit in die Bypass-Leitung 50 hineingezogen. Durch das innerhalb der Bypass-Leitung 50 angeordnete und als Steg ausgebildete Leitelement 52 wird das in die Bypass-Leitung 50 einströmende Luft-Material-Gemisch in Richtung des Umlenkabschnitts 54 geleitet, welcher in dem direkten Strömungsweg zur Ausbringleitung 44 angeordnet ist und eine Umlenkung des Luft-Material-Gemisches verursacht. An den Umlenkabschnitt 54 schließt sich eine Abrisskante 56 an, welche einen Strömungsabriss verursacht und einen Teil der Luft des Luft-Material-Gemisches in Richtung der Ausbringleitung 44 umlenkt. Die übrige Luft des Luft-Material-Gemisches sowie das Material des Luft-Material-Gemisches werden wieder aus der Bypass-Leitung 50 herausgeleitet und der Förderleitung 20 zugeführt.

Das Steuersystem 66 ist außerdem dazu eingerichtet, das Dosierorgan 16 der zugehörigen Verteilmaschine 10 zu steuern, wobei das Steuersystem 66 dazu eingerichtet ist, das Dosierorgan 16 basierend auf der Vortriebsgeschwindigkeit der Verteilmaschine 10, einer Förderdauer des zu verteilenden Materials vom Dosierorgan 16 zum Verteilerkopf 22 und einer Förderdauer des zu verteilenden Materials vom Verteilerkopf 22 zu den Ausbringelementen 24, derart anzusteuern, dass zu jeder Zeit vorauseilend die momentan notwenige Gesamtmenge des auszubringenden Materials am Verteilerkopf 22 ansteht.

Das Steuersystem 66 umfasst hierzu eine Speichereinheit 68, eine Erfassungseinrichtung 70 und eine Auswerteeinheit 72. Die Auswerteeinheit 72 ist dazu eingerichtet, anhand von Daten, welche in der Speichereinheit 68 hinterlegt sind, oder anhand von Daten, welche von der Erfassungseinrichtung 70 erfasst werden, Ausbringparameter zu ermitteln, welche eine momentan notwendige Gesamtmenge des zu verteilenden Materials, eine Förderdauer des zu verteilenden Materials von dem Dosierorgan 16 zum Verteilerkopf 22 und eine Förderdauer des zu verteilenden Materials von dem Verteilerkopf 22 zu den Ausbringelementen 24 umfassen. Das Steuersystem 66 steuert das Dosierorgan 16 dabei derart, dass die in die Förderleitung 20 eingespeiste Menge zu verteilenden Materials der am Verteilerkopf 22 notwendigen Gesamtmenge an zu verteilendem Material entspricht. Die am Verteilerkopf 22 notwendige Gesamtmenge an zu verteilendem Material verhält sich bezüglich der notwendigen Gesamtmenge an zu verteilendem Material, welche benötigt wird, wenn keine der Ausbringleitungen 44 blockiert ist, ebenso wie die Anzahl der nicht blockierten Ausbringleitungen 44 bezüglich der Gesamtanzahl aller Ausbringleitungen 44.

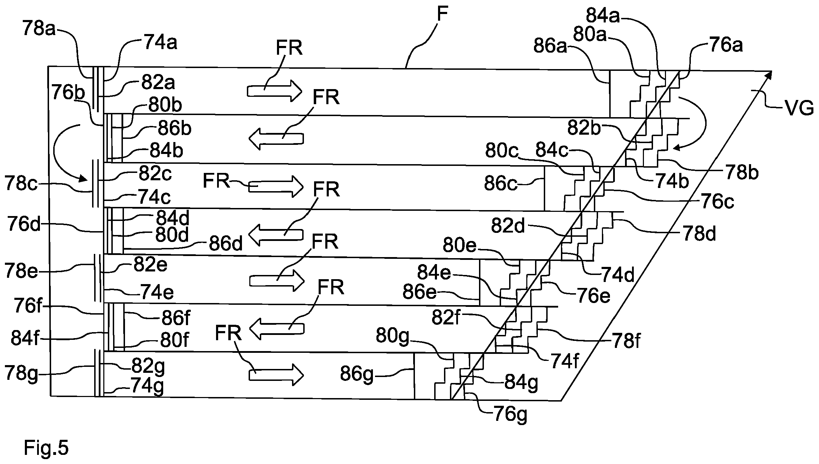

Die Fig. 5 zeigt einen Verteilvorgang, welcher beispielsweise mit der in den Fig. 1 bis 3 dargestellten Verteilmaschine 10 umsetzbar ist.

Der Verteilvorgang betrifft das Ausbringen von Saatgut auf einem Feld F, wobei die Verteilcharakteristik der landwirtschaftlichen pneumatischen Verteilmaschine im Bereich des Vorgewendes VG anzupassen ist. Die Verteilmaschine bewegt sich dabei in Fahrtrichtung FR. Damit eine möglichst exakte Saatgutablage an der Feldgrenze und im Bereich des Vorgewendes VG umgesetzt werden kann, erfolgt die Dosierung des Saatguts durch das Dosierorgan 16 und das Freigeben und Blockieren der Ausbringleitungen 44 durch die Umschaltelemente 60 in Abhängigkeit der Vortriebsgeschwindigkeit der Verteilmaschine 10, die Förderdauer des Saatguts vom Dosierorgan 16 zum Verteilerkopf 22 und der Förderdauer des Saatguts vom Verteilerkopf 22 zu den Ausbringelementen 24.

Zunächst wird auf der Höhe 78a die Dosierung des Saatguts durch das Dosierorgan 16 gestartet. Nach dem Ablauf der Förderdauer des Saatguts vom Dosierorgan 16 zum Verteilerkopf 22 werden auf der Höhe 82a sämtliche Ausbringleitungen 44 freigeben, sodass nach der Förderdauer des Saatguts vom Verteilerkopf 22 zu den Ausbringelementen 24 auf der Höhe 74a die Saatgutablage beginnt. Das Starten der Dosierung des Saatguts durch das Dosierorgan 16 erfolgt dabei unter Berücksichtigung der Vortriebsgeschwindigkeit der Verteilmaschine 10, sodass die Saatgutablage an der Feldkante beginnt.

Anschließend wird auf der Höhe 80a die Dosierung des Saatguts durch das Dosierorgan 16 in vier zeitlich beabstandeten Vorgängen stufenweise um jeweils 25% der Gesamtausbringmenge reduziert. Nach dem Ablauf der Förderdauer des Saatguts vom Dosierorgan 16 zum Verteilerkopf 22 werden auf der Höhe 84a die Ausbringleitungen 44 in vier zeitlich beabstandeten Vorgängen stufenweise um jeweils 25% der Gesamtanzahl der Ausbringleitungen 44 blockiert, wobei zunächst die Ausbringleitungen 44 blockiert werden, die mit den auf der rechten Seite der Verteilmaschine 10 angeordneten Ausbringelementen 24 verbunden sind und zuletzt die Ausbringleitungen 44 blockiert werden, die mit den auf der linken Seite der Verteilmaschine 10 angeordneten Ausbringelementen 24 verbunden sind. Nach der Förderdauer des Saatguts vom Verteilerkopf 22 zu den Ausbringelementen 24 auf der Höhe 76a endet folglich die Saatgutablage ebenfalls in 4 Stufen. Das Reduzieren der Dosierung des Saatguts durch das Dosierorgan 16 erfolgt dabei unter Berücksichtigung der Vortriebsgeschwindigkeit der Verteilmaschine 10, sodass die Saatgutablage möglichst exakt an der schräg verlaufenden Kante zum Vorgewende VG endet. Dabei ist zu berücksichtigen, dass die Verteilmaschine 10 zumindest ab der Höhe 86a aufgrund des nahenden Schaltvorgangs eine zumindest annähernd konstante Vortriebsgeschwindigkeit beibehält.

Nach einem Wendevorgang wird auf der Höhe 78b die Dosierung des Saatguts durch das Dosierorgan 16 in vier zeitlich beabstandeten Vorgängen stufenweise um jeweils 25% der Gesamtausbringmenge erhöht. Nach dem Ablauf der Förderdauer des Saatguts vom Dosierorgan 16 zum Verteilerkopf 22 werden auf der Höhe 82b die Ausbringleitungen 44 in vier zeitlich beabstandeten Vorgängen stufenweise um jeweils 25% der Gesamtanzahl der Ausbringleitungen 44 freigegeben, wobei zunächst die Ausbringleitungen 44 freigegeben werden, die mit den auf der rechten Seite der Verteilmaschine 10 angeordneten Ausbringelementen 24 verbunden sind und zuletzt die Ausbringleitungen 44 freigegeben werden, die mit den auf der linken Seite der Verteilmaschine 10 angeordneten Ausbringelementen 24 verbunden sind. Nach der Förderdauer des Saatguts vom Verteilerkopf 22 zu den Ausbringelementen 24 beginnt folglich auf der Höhe 74b die Saatgutablage ebenfalls in 4 Stufen. Das Erhöhen der Dosierung des Saatguts durch das Dosierorgan 16 erfolgt dabei unter Berücksichtigung der Vortriebsgeschwindigkeit der Verteilmaschine 10, sodass die Saatgutablage möglichst exakt an der schräg verlaufenden Kante zum Vorgewende VG beginnt.

Anschließend wird auf der Höhe 80b die Dosierung des Saatguts durch das Dosierorgan 16 unterbrochen. Nach dem Ablauf der Förderdauer des Saatguts vom Dosierorgan 16 zum Verteilerkopf 22 werden auf der Höhe 84b sämtliche Ausbringleitungen 44 blockiert. Nach der Förderdauer des Saatguts vom Verteilerkopf 22 zu den Ausbringelementen 24 endet folglich auf der Höhe 76b die Saatgutablage. Das Unterbrechen der Dosierung des Saatguts durch das Dosierorgan 16 erfolgt dabei unter Berücksichtigung der Vortriebsgeschwindigkeit der Verteilmaschine 10, sodass die Saatgutablage möglichst exakt an der Feldgrenze endet. Dabei ist zu berücksichtigen, dass die Verteilmaschine 10 zumindest ab der Höhe 86b aufgrund des nahenden Schaltvorgangs eine zumindest annähernd konstante Vortriebsgeschwindigkeit beibehält.

Die beschriebenen Schritte werden im Folgenden wiederholt, sodass die Saatgutablage auf den Höhen 74c-74g beginnt und auf den Höhen 76c-76g endet, die Dosierung auf den Höhen 78c-78g erhöht und auf den Höhen 80c-80g reduziert wird und die Ausbringleitungen 44 auf den Höhen 82c-82g freigegeben und auf den Höhen 84c-84g blockiert werden. Wobei jeweils zu berücksichtigen ist, dass die Verteilmaschine 10 zumindest ab den Höhen 86c-86g aufgrund des nahenden Schaltvorgangs eine zumindest annähernd konstante Vortriebsgeschwindigkeit beibehält.

Bei dem dargestellten Vorgang wird die Dosierung des Saatguts durch das Dosierorgan 16 in vier zeitlich beabstandeten Vorgängen stufenweise um jeweils 25% der Gesamtausbringmenge reduziert beziehungsweise erhöht, wobei auch die Ausbringleitungen 44 in vier zeitlich beabstandeten Vorgängen stufenweise um jeweils 25% der Gesamtanzahl der Ausbringleitungen 44 blockiert beziehungsweise freigegeben werden. Grundsätzlich kann die Dosierung des Saatguts durch das Dosierorgan 16 auch in einer anderen Anzahl von zeitlich beabstandeten Vorgängen stufenweise reduziert beziehungsweise erhöht werden, wobei dann auch die Ausbringleitungen 44 in der anderen Anzahl von zeitlich beabstandeten Vorgängen stufenweise blockiert beziehungsweise freigegeben werden. Dabei entspricht die maximale Anzahl der Stufen, in denen die Gesamtausbringmenge reduziert beziehungsweise erhöht werden kann und die Ausbringleitungen 44 blockiert beziehungsweise freigegeben werden können, der Anzahl der blockierbaren Ausbringleitungen 44 der Verteilmaschine 10. Insbesondere müssen die Stufen nicht zeitlich beabstandet sein. Abhängig von der Kontur der zu bearbeitenden Fläche können zwei oder mehrere Stufen auch gleichzeitig schalten. Dabei müssen diese Stufen nicht benachbarten Ausbringelementen 24 entsprechen.

### Bezugszeichenliste

- 10: Verteilmaschine
- 12: Rahmenaufbau
- 14: Vorratsbehälter
- 16: Dosierorgan
- 18: Fördergebläse
- 20: Förderleitung
- 22: Verteilerkopf
- 24: Ausbringelemente
- 26: Tragrahmen
- 28: Walze
- 30: Tiefenführungsrollen
- 32: Striegel
- 34a, 34b: Spuranreißer
- 36a, 36l: Ausgangsöffnungen
- 38, 38a-38l: Rückführleitungen
- 40a, 40b: Sammelelemente
- 42a, 42b: Sammelleitungen
- 44, 44a-44l: Ausbringleitungen
- 46, 46a, 46l: Rückführeinrichtungen
- 48: Einschnürung
- 50: Bypass-Leitung
- 52: Leitelement
- 54: Umlenkabschnitt
- 56: Abrisskante
- 58: Weiche
- 60: Umschaltelement
- 62: Einschnürung
- 64: Betätigungselement
- 66: Steuersystem
- 68: Speichereinheit
- 70: Erfassungseinrichtung
- 72: Auswerteeinheit
- 74a-74g: Beginn der Saatgutablage
- 76a-76g: Ende der Saatgutablage
- 78a-78g: Erhöhen der Dosierung
- 80a-80g: Reduzieren der Dosierung
- 82a-82g: Freigeben der Ausbringleitungen
- 84a-84g: Blockieren der Ausbringleitungen
- 86a-86g: Geschwindigkeit verringern

- D: Drehrichtung
- F: Feld
- FR: Fahrtrichtung
- VG: Vorgewende

## Patentansprüche

1. Landwirtschaftliche pneumatische Verteilmaschine (10) zum Verteilen zumindest eines zu verteilenden körnigen Materials, vorzugsweise Saatguts und/oder Düngemittels, mit
- zumindest einem Verteilerkopf (22), welcher über eine Förderleitung (20) mit einem Dosierorgan (16) verbunden ist, wobei der Verteilerkopf (22) mehrere Ausgangsöffnungen (36a, 36l) aufweist und jede Ausgangsöffnung (36a, 36l) pneumatisch über eine Ausbringleitung (44, 44a-44l) mit zumindest einem Ausbringelement (24) verbunden ist, wobei zumindest einige der Ausbringleitungen (44, 44a-44l) mittels eines Umschaltelements (60) blockierbar sind, sodass das Eintreten eines Luft-Material-Gemisches in die entsprechende Ausbringleitung (44, 44a-44l) unterbunden wird,
- wobei zumindest einige Ausgangsöffnungen (36a, 36l) jeweils über eine Rückführleitung (38, 38a-38l) pneumatisch mit der Förderleitung (20) verbunden sind und die Rückführleitungen (38, 38a-38l) jeweils eine Abzweigung aufweisen, welche mit einer Bypass-Leitung (50) verbunden ist, die in die zugehörige Ausbringleitung (44, 44a-44l) einmündet, und
wobei ein Zuführbereich zumindest den Endbereich der Förderleitung (20), den Verteilerkopf (22) und die Rückführleitungen (38, 38a-38l) umfasst und das rückgeführte Material innerhalb des Zuführbereichs zirkulieren kann;
und
- einem Steuersystem (66), welches dazu eingerichtet ist, das Dosierorgan (16) zu steuern,
**dadurch gekennzeichnet, dass**
das Steuersystem (66) dazu eingerichtet ist, das Dosierorgan (16) basierend auf der Vortriebsgeschwindigkeit der Verteilmaschine (10), einer Förderdauer des zu verteilenden Materials vom Dosierorgan (16) zum Verteilerkopf (22) und einer Förderdauer des zu verteilenden Materials vom Verteilerkopf (22) zu den Ausbringelementen (24), derart anzusteuern, dass zu jeder Zeit vorauseilend die momentan notwenige Gesamtmenge des auszubringenden Materials am Verteilerkopf (22) ansteht, wobei zu jeder Zeit vorauseilend die ermittelte notwendige Gesamtmenge des auszubringenden Materials im Rückführbereich zirkuliert und bei Freigabe zumindest einer zuvor blockierten Ausbringleitung (44, 44a-44l) ohne Verzögerung eine notwendige Teilmenge der entsprechenden Ausbringleitung (44, 44a-44l) zugeführt wird.

2. Verteilmaschine (10) nach Anspruch 1,
**dadurch gekennzeichnet, dass** das Steuersystem (66) das Dosierorgan (16) derart steuert, dass die in die Förderleitung (20) eingespeiste Menge zu verteilenden Materials der am Verteilerkopf (22) notwendigen Gesamtmenge an zu verteilendem Material entspricht.

3. Verteilmaschine (10) nach Anspruch 1 oder 2,
wobei das Steuersystem (66) eine Speichereinheit (68), zumindest eine Erfassungseinrichtung (70) und/oder eine Auswerteeinheit (72) umfasst,
**dadurch gekennzeichnet, dass** die Auswerteeinheit (72) dazu eingerichtet ist, anhand von Daten, welche in der Speichereinheit (68) hinterlegt sind und/oder von der zumindest einen Erfassungseinrichtung (70) erfasst werden, Ausbringparameter zu ermitteln, welche zumindest eine momentan notwendige Gesamtmenge des zu verteilenden Materials, eine Förderdauer des zu verteilenden Materials von dem Dosierorgan (16) zum Verteilerkopf (22) und eine Förderdauer des zu verteilenden Materials von dem Verteilerkopf (22) zu den Ausbringelementen (24) umfassen.

4. Verteilmaschine (10) nach Anspruch 3,
**dadurch gekennzeichnet, dass** das Umschaltelement (60) anhand der ermittelten Ausbringparameter mittels eines vom Steuersystem (66), vorzugsweise automatisiert, betätigbaren Betätigungselements (64) zwischen einer die Ausbringleitung (44, 44a-44l) freigebenden Ausbringstellung und einer die Ausbringleitung (44, 44a-44l) blockierenden Rückführstellung verbringbar ist.

5. Verteilmaschine (10) nach Anspruch 4,
**dadurch gekennzeichnet, dass** in der Rückführstellung des Umschaltelements (60) Luft des Luft-Material-Gemisches der Ausbringleitung (44, 44a-44l) über die Bypass-Leitung (50) zugeführt wird.

6. Verteilmaschine (10) nach einem der vorangegangenen Ansprüche,
**dadurch gekennzeichnet, dass** die Förderleitung (20) eine düsenartige Einschnürung (48) aufweist.

7. Verteilmaschine (10) nach einem der vorangegangenen Ansprüche,
**dadurch gekennzeichnet, dass** jeweils mehrere benachbarte Rückführleitungen (38, 38a-38l) in ein Sammelelement (40a, 40b) münden und die Sammelelemente (40a, 40b) mit der Förderleitung (20) verbunden sind.

8. Verteilmaschine (10) nach einem der vorangegangenen Ansprüche,
**dadurch gekennzeichnet, dass** die Ansteuerung der die Umschaltelemente (60) verbringenden Betätigungselemente (64) individuell zusätzlich auf der Förderdauer zwischen dem Verteilerkopf (22) und dem jeweiligen Ausbringelement (24) basiert und zeitlich derart erfolgt, dass zu jeder Zeit die notwendige Teilmenge ohne Verzögerung am entsprechenden Ausbringelement (24) verfügbar ist.

## Claims

1. Agricultural pneumatic distribution machine (10) for distributing at least one granular material to be distributed, preferably seed and/or fertilizer, having
- at least one distribution head (22), which is connected to a metering member (16) via a delivery line (20), wherein the distribution head (22) has a plurality of outlet openings (36a, 361) and each outlet opening (36a, 361) is connected pneumatically to at least one dispensing element (24) via a dispensing line (44, 44a-441), wherein at least some of the dispensing lines (44, 44a-441) are able to be blocked by means of a switching element (60) such that the entry of an air/material mixture into the corresponding dispensing line (44, 44a-44l) is prevented,
wherein at least some outlet openings (36a, 361) are respectively connected pneumatically to the delivery line (20) via a return line (38, 38a-381) and the return lines (38, 38a-381) each have a branch, which is connected to a bypass line (50) that leads into the associated dispensing line (44, 44a-44l) and
wherein a feed region comprises at least the end region of the delivery line (20), the distribution head (22) and the return lines (38, 38a-381) and the returned material can circulate within the feed region;
and
- a control system (66), which is configured to control the metering member (16),
**characterized in that**
the control system (66) is configured to control the metering member (16) on the basis of the advancing rate of the distribution machine (10), a delivery time of the material to be distributed from the metering member (16) to the distribution head (22), and a delivery time of the material to be distributed from the distribution head (22) to the dispensing elements (24), such that at any time, the currently required total quantity of material to be dispensed is already present at the distribution head (22), wherein, at any time, the determined required total quantity of material to be dispensed is already circulating in the return region and, before at least one previously blocked dispensing line (44, 44a-441) is opened up, a required sub-quantity is fed without delay to the corresponding dispensing line (44, 44a-441).

2. Distribution machine (10) according to Claim 1,
**characterized in that** the control system (66) controls the metering member (16) such that the quantity of material to be dispensed that is fed into the delivery line (20) corresponds to the required total quantity of material to be distributed that is required at the distribution head (22).

3. Distribution machine (10) according to Claim 1 or 2,
wherein the control system (66) comprises a memory unit (68), at least one sensing device (70) and/or an evaluation unit (72),
**characterized in that** the evaluation unit (72) is configured to use data stored in the memory unit (68) and/or sensed by the at least one sensing device (70) to determine dispensing parameters, which encompass at least one currently required total quantity of the material to be distributed, a delivery time of the material to be distributed from the metering member (16) to the distribution head (22) and a delivery time of the material to be distributed from the distribution head (22) to the dispensing elements (24).

4. Distribution machine (10) according to Claim 3,
**characterized in that** the switching element (60) is movable, on the basis of the determined dispensing parameters, between a dispensing position, opening up the dispensing line (44, 44a-441), and a return position, blocking the dispensing line (44, 44a-441), by means of an actuating element (64) that is actuable by the control system (66), preferably in an automated manner.

5. Distribution machine (10) according to Claim 4,
**characterized in that**, in the return position of the switching element (60), air of the air/material mixture is fed to the dispensing line (44, 44a-441) via the bypass line (50).

6. Distribution machine (10) according to one of the preceding claims,
**characterized in that** the delivery line (20) has a nozzle-like constriction (48).

7. Distribution machine (10) according to one of the preceding claims,
**characterized in that** in each case a plurality of adjacent return lines (38, 38a-381) lead into a manifold element (40a, 40b) and the manifold elements (40a, 40b) are connected to the delivery line (20).

8. Distribution machine (10) according to one of the preceding claims,
**characterized in that** the control of the actuating elements (64) that move the switching elements (60) is additionally based individually on the delivery time between the distribution head (22) and the respective dispensing element (24) and takes place in time such that, at any time, the required sub-quantity is available at the corresponding dispensing element (24) without delay.

## Revendications

1. Machine de distribution pneumatique agricole (10) destinée à distribuer au moins un matériau granulaire à distribuer, de préférence des semences et/ou des engrais, ladite machine comprenant
- au moins une tête de distribution (22) qui est reliée à un élément de dosage (16) par le biais d'une conduite de distribution (20), la tête de distribution (22) comportant une pluralité d'ouvertures de sortie (36a, 361) et chaque ouverture de sortie (36a, 361) étant reliée pneumatiquement à au moins un élément d'épandage (24) via une conduite d'épandage (44, 44a-441), au moins certaines des conduites d'épandage (44, 44a-441) pouvant être bloquées au moyen d'un élément de commutation (60) de façon à empêcher un mélange air-matériau d'entrer dans la conduite d'épandage correspondante (44, 44a-441),
- au moins certaines ouvertures de sortie (36a, 361) étant reliées chacune pneumatiquement à la conduite de transport (20) par le biais d'une conduite de retour (38, 38a-381) et les conduites de retour (38, 38a-38I) comportant chacune un embranchement qui est relié à une conduit de dérivation (50) qui débouche dans la conduite d'épandage (44, 44a-441) associée, et une zone d'alimentation comprenant au moins la zone d'extrémité de la conduite de transport (20), la tête de distribution (22) et les conduites de retour (38, 38a-38I) et pouvant faire circuler le matériau de retour dans la zone d'alimentation ;
et
- un système de commande (66) qui est adapté pour commander l'élément de dosage (16),
**caractérisée en ce que**
le système de commande (66) est adapté pour commander l'élément de dosage (16) sur la base de la vitesse de progression de la machine de distribution (10), d'une durée de transport du matériau à distribuer de l'élément de dosage (16) vers la tête de distribution (22) et d'une durée de transport du matériau à distribuer de la tête de distribution (22) aux éléments d'épandage (24) de telle sorte que la quantité totale instantanément nécessaire de matériau à épandre soit à tout moment à l'avance présente au niveau de la tête de distribution (22), la quantité totale nécessaire déterminée du matériau à épandre circulant à tout moment à l'avance dans la zone de retour et, lors de la libération d'au moins une conduite d'épandage (44, 44a-441) précédemment bloquée, une quantité partielle nécessaire soit amenée sans délai à la conduite d'épandage (44, 44a-441) correspondante.

2. Machine de distribution (10) selon la revendication 1,
**caractérisé en ce que** le système de commande (66) commande l'élément de dosage (16) de telle sorte que la quantité de matériau à distribuer, introduite dans la conduite de transport (20), correspond à la quantité totale de matériau à distribuer qui est nécessaire au niveau de la tête de distribution (22).

3. Machine de distribution (10) selon la revendication 1 ou 2,
le système de commande (66) comprenant une unité de stockage (68), au moins un moyen de détection (70) et/ou une unité d'évaluation (72),
**caractérisé en ce que** l'unité d'évaluation (72) est adaptée pour déterminer sur la base de données qui sont stockées dans l'unité de stockage (68) et/ou acquises par l'au moins un moyen d'acquisition (70), des paramètres d'épandage qui comprennent au moins une quantité totale instantanément nécessaire du matériau à distribuer, une durée de transport du matériau à distribuer de l'élément de dosage (16) à la tête de distribution (22) et une durée de transport du matériau à distribuer de la tête de distribution (22) aux éléments d'épandage (24).

4. Machine de distribution (10) selon la revendication 3,
**caractérisé en ce que** l'élément de commutation (60) peut être déplacé, sur la base des paramètres d'épandage déterminés au moyen d'un élément d'actionnement (64) qui peut être actionné, de préférence de manière automatisée, par le système de commande (66), entre une position d'épandage libérant la conduite d'épandage (44, 44a-441) et une position de retour bloquant la conduite d'épandage (44, 44a-441).

5. Machine de distribution (10) selon la revendication 4,
**caractérisé en ce que** dans la position de retour de l'élément de commutation (60), l'air du mélange air-matériau est amené à la conduite d'épandage (44, 44a-441) par le biais de la conduite de dérivation (50).

6. Machine de distribution (10) selon l'une des revendications précédentes,
**caractérisée en ce que** la conduite de transport (20) comporte un étranglement (48) en forme de buse.

7. Machine de distribution (10) selon l'une des revendications précédentes,
**caractérisée en ce que** une pluralité de conduites de retour (38, 38a-38I) adjacentes débouchent chacune dans un élément collecteur (40a, 40b) et les éléments collecteurs (40a, 40b) sont reliés à la conduite de transport (20).

8. Machine de distribution (10) selon l'une des revendications précédentes,
**caractérisée en ce que** la commande des éléments d'actionnement (64) déplaçant les éléments de commutation (60) est basée pour chacun d'eux sur la durée de transport entre la tête de distribution (22) et l'élément d'épandage (24) respectif et est effectuée dans le temps de telle sorte que la quantité partielle nécessaire soit disponible à tout moment sans délai au niveau de l'élément d'épandage (24) correspondant.
